# EUROPÄISCHE PATENTSCHRIFT

(11) **EP 3 782 933 B1**
(45) Veröffentlichungstag und Bekanntmachung des Hinweises auf die Patenterteilung: **15.03.2023**
(21) Anmeldenummer: 19193382.9
(22) Anmeldetag: 23.08.2019
(51) Int. Cl.: B65G 1/04, B65G 57/30, B66F 9/06

(54) **BEHÄLTERSTAPELLAGER-BESCHICKUNGSWAGEN**
CONTAINER STACKING PICKING CART
CHARIOT DE CHARGEMENT EN ENTREPÔT DE PILES DE RÉCIPIENT

(43) Veröffentlichungstag der Anmeldung: 24.02.2021
(73) Patentinhaber: Jungheinrich Aktiengesellschaft, 22047 Hamburg (DE)
(72) Erfinder: Morawietz, Timm, 66636 Tholey-Überroth (DE); Cavelius, Jörg, 61118 Bad Vilbel (DE); Becker, Michael, 63512 Hainburg (DE)
(74) Vertreter: Keil & Schaafhausen Patentanwälte PartGmbB

(56) Entgegenhaltungen:
- EP-A1- 2 404 847
- WO-A1-2017/091596
- CN-A- 108 128 587
- CN-A- 109 573 443
- DE-A1- 19 855 927
- US-A1- 2003 184 071
- US-B1- 10 289 117

## Beschreibung

Die vorliegende Erfindung betrifft einen Behälterstapellager-Beschickungswagen mit einem Fahrgestell und einer gegenüber dem Fahrgestell höhenverstellbaren Behälteraufnahme, die einen Aufnahmebereich mit einer Behälteraufstandsfläche aufweist, wobei zwischen dem Fahrgestell und der Behälteraufnahme eine in eine Hubrichtung wirkende Hubeinrichtung angeordnet ist.

Ein derartiger Beschickungswagen ist beispielsweise aus DE 198 49 391 C2 bekannt.

Ein Behälterstapellager ist ein Lager, in dem eine Vielzahl von Behältern mit einer relativ guten Ausnutzung des zur Verfügung stehenden Raumes gelagert werden können, weil die Behälter in Stapeln angeordnet sind. Wenn die Behälter von unten in einen Stapel eingebracht und auch von unten wieder aus dem Stapel entnommen werden sollen, dann gibt es unterhalb der Stapel aus Behältern einen Beschickungsraum, in den der Beschickungswagen eingefahren werden kann. Der unterste Behälter eines Stapels wird dabei durch eine lösbare Haltevorrichtung gehalten. Zum Einbringen eines Behälters wird der Beschickungswagen unter den Stapel gefahren. Er hebt dann den Behälter an, bis er den bis dahin untersten Behälter des Stapels kontaktiert. Bei einem weiteren Anheben des Behälters wird der gesamte Stapel angehoben. Das Anheben erfolgt solange, bis der neu einzubringende Behälter an der oben genannten Haltevorrichtung vorbeigeführt worden ist und bei einer folgenden Absenkbewegung von der Haltevorrichtung gehalten wird. Wenn der Stapel aus dem Behälter entnommen werden soll, muss wiederum der gesamte Stapel etwas angehoben werden, so dass die Haltevorrichtung gelöst und kurzzeitig offengehalten werden kann. Danach wird der Stapel insgesamt abgesenkt und die Haltevorrichtung greift dann am bis dahin zweituntersten Behälter an, um diesen zu halten. Sobald der bis dahin zweitunterste Behälter von der Haltevorrichtung an einer weiteren Bewegung nach unten gehindert wird, kann der zu entnehmende Behälter weiter abgesenkt werden. Der Beschickungswagen kann den Behälter dann aus dem Behälterstapellager heraus transportieren.

Der Beschickungswagen muss beim Einlagern und auch beim Entnehmen eines Behälters relativ genau unter dem betreffenden Stapel positioniert werden. Beim Einlagern muss der einzulagernde Behälter in Eingriff mit dem untersten Behälter des Stapels kommen. Beim Entnehmen des Behälters muss der Behälter zuverlässig auf der Behälteraufstandsfläche abgestellt werden können. Je höher die Anforderung an die Positioniergenauigkeit des Beschickungswagens ist, desto mehr Zeit benötigt der Beschickungswagen, um die gewünschte Position zu erreichen und umso höher sind die Aufwendungen für die entsprechende Steuerung.

CN 109 573 433 A1 zeigt ein Regalbediengerät, bei dem an einer Hubsäule ein Lastaufnahmemittel angeordnet ist, das in ein Regal seitlich eingefahren werden kann.

WO 2017/091596 A1 beschreibt eine mobile Antriebseinheit für ein Inventarsystem. Die Antriebseinheit umfasst eine Basis, die an einem Rahmen durch eine Schwenkanordnung aufgehängt ist. Die Basis trägt eine Plattform, die so konfiguriert ist, dass sie in einen Inventarhalter des Inventarsystems eingreift. Die Bewegung der Basis bewirkt, dass die Plattform kippt. Dabei ist die Kipprichtung beispielsweise weg von einer Richtung einer Reaktionskraft ausgerichtet, die aufgrund der Beschleunigung oder Verzögerung der mobilen Antriebseinheit auf die Basis wirkt. Die mobile Antriebseinheit umfasst zudem ein Fahrgestell, wobei die Plattform gegenüber dem Fahrgestell höhenverstellbar ist. Zwischen dem Fahrgestell und der Plattform ist eine in eine Hubrichtung wirkende Hubeinrichtung angeordnet. Zwischen der Plattform und dem Fahrgestell ist weiterhin eine Lagereinrichtung angeordnet, die die Plattform lagert und eine Bewegung der Plattform gegenüber dem Fahrgestell quer zur Hubrichtung ermöglicht. Auch ist eine Fixiereinrichtung vorgesehen, die die Plattform bei einem Transport eines Inventarsystems gegenüber dem Fahrgestell quer zur Hubrichtung fixieren kann, wobei die Fixiereinrichtung lösbar ist.

Der Erfindung liegt die Aufgabe zugrunde, das Einlagern und die Entnahme von Behältern aus einem Behälterstapellager wirtschaftlich zu gestalten.

Diese Aufgabe wird durch einen Behälterstapellager-Beschickungswagen nach Anspruch 1 gelöst. Zwischen der Behälteraufnahme und dem Fahrgestell ist eine Lagereinrichtung angeordnet, die den Behälter schwimmend lagert und eine Bewegung der Behälteraufnahme gegenüber dem Fahrgestell quer zur Hubrichtung ermöglicht, wobei eine Fixiereinrichtung (11, 15, 25) vorgesehen ist, die die Behälteraufnahme bei einem Transport eines Behälters aus einem Behälterstapellager (4) gegenüber dem Fahrgestell (2) quer zur Hubrichtung fixiert, wobei die Fixiereinrichtung (11, 15, 25) lösbar ist, um die schwimmende Lagerung zu ermöglichen.

Mit einer derartigen Ausgestaltung wird die Anforderung an die Positioniergenauigkeit des Beschickungswagens in Bezug auf den Stapel, in den ein Behälter eingelagert werden soll oder aus dem ein Behälter entnommen werden soll, vermindert oder klein gemacht. Man kann den Beschickungswagen mit einer größeren Toleranz unterhalb des Stapels positionieren. Wenn der Behälter beim Einlagern angehoben wird, kann er sich beim Kontaktieren des untersten Behälters des Stapels etwas seitlich verschieben, weil die Behälteraufnahme eine derartige seitliche Bewegung erlaubt. Das Gleiche gilt bei der Entnahme eines Behälters aus dem Stapel. Wenn die Behälteraufnahme mit der Behälteraufstandsfläche den untersten Behälter eines Stapels kontaktiert, kann sich die Behälteraufnahme gegenüber dem Fahrgestell etwas seitlich verlagern, um den Behälter aufnehmen zu können. Es ist eine Fixiereinrichtung vorgesehen, die die Behälteraufnahme gegenüber dem Fahrgestell quer zur Hubrichtung fixiert, wobei die Fixiereinrichtung lösbar ist. Eine seitliche Bewegung der Behälteraufnahme ist nicht in allen Betriebszuständen des

Beschickungswagens gewünscht. Beispielsweise möchte man beim Transport des Behälters aus dem Behälterstapellager die Behälteraufnahme gegenüber dem Fahrgestell fixieren können. Hierzu wird die Fixiereinrichtung verwendet. Die Fixiereinrichtung ist allerdings lösbar, so dass man bei dem oben geschilderten Einlagerungsvorgang und dem oben geschilderten Auslagerungsvorgang gewährleisten kann, dass die Behälteraufnahme gegenüber dem Fahrgestell schwimmend gelagert ist.

Vorzugsweise weist die Fixiereinrichtung eine Stiftanordnung mit mindestens einem parallel zur Hubrichtung verlaufenden Stift auf, der in einer quer zur Hubrichtung ortsfest angeordneten Bohrung angeordnet ist, wobei der Stift einen ersten Abschnitt mit einem ersten Durchmesser, der kleiner ist als ein Durchmessung der Bohrung, und einem Abschnitt mit einem zweiten Durchmesser aufweist, der dem Durchmesser der Bohrung entspricht, wobei zwischen dem ersten Abschnitt und dem zweiten Abschnitt ein Übergangsabschnitt vorgesehen ist, in dem sich der Durchmesser des Stiftes vom ersten Durchmesser zum zweiten Durchmesser vergrößert. Wenn der Stift gegenüber der Bohrung bewegt worden ist, so dass sich der erste Abschnitt in der Bohrung befindet, dann kann der Stift in der Bohrung bewegt werden. Der Stift ist an der Behälteraufnahme befestigt, so dass sich in diesem Zustand die Behälteraufnahme gegenüber der quer zur Hubrichtung ortsfest angeordneten Bohrung bewegen kann. Wenn die Behälteraufnahme mit dem Stift dann so bewegt wird, dass sich der zweite Abschnitt des Stiftes in der Bohrung befindet, dann ist eine derartige Bewegung nicht mehr möglich. Der zweite Durchmesser ist geringfügig kleiner als der Durchmesser der Bohrung, um ein Klemmen des Stiftes gegenüber der Bohrung zu verhindern. Ein kleines Spiel ist akzeptabel. Der Übergangsabschnitt bewirkt, dass sich der Stift in der Bohrung zentriert, wenn der zweite Abschnitt des Stifts in die Bohrung bewegt wird.

Vorzugsweise weist die Hubeinrichtung einen ersten Hubantrieb auf und ein zweiter Hubantrieb ist vorgesehen, der auf eine Entriegelungseinrichtung für Halteelemente eines Behälterstapellagers wirkt, wobei der zweite Hubantrieb einen Teil der Fixiereinrichtung bildet. Wenn man einen Behälter aus einem Stapel entnimmt, dann müssen die Halteelemente des Behälterstapellagers gelöst und offengehalten werden, bis der zu entnehmende Behälter an den Halteelementen vorbeigeführt worden ist. Dies kann man dadurch bewerkstelligen, dass man nach dem Bewegen der Behälteraufnahme an den untersten und damit zu entnehmenden Behälter des Stapels mit Hilfe des zweiten Hubantriebs die Entriegelungseinrichtung bewegt. Die Entriegelungseinrichtung wird dann beispielsweise nach oben bewegt, um die Halteelemente offen zu halten und ggfs. auch zu lösen, wenn das Lösen noch nicht durch den Behälter selbst erfolgt. In dieser Situation ist es aber günstig, wenn die Behälteraufnahme quer zur Hubrichtung der ersten Hubeinrichtung bewegt werden kann, um in der gewünschten Position am Behälter platziert werden zu können. Dementsprechend kann der zweite Hubantrieb verwendet werden, um die Fixiereinrichtung zu lösen, beispielsweise indem er den Stift oder die Stifte anhebt, so dass der erste, kleinere Durchmesser des Stifts in der Bohrung angeordnet ist.

Hierbei ist bevorzugt, dass die Entriegelungselementanordnung mehrere im Bereich von Ecken der Behälteraufnahme angeordnete Entriegelungselemente aufweist, wobei zumindest einige der Entriegelungselemente eine Zentrierflächenanordnung aufweisen, die zum Aufnahmebereich gerichtet ist. Die Entriegelungselemente bekommen damit eine weitere Funktion. Sie dienen dazu, die Behälteraufnahme gegenüber dem Behälter zu positionieren.

Hierbei ist bevorzugt, dass die Entriegelungselementanordnung mit der Stiftanordnung in Wirkverbindung steht. Wenn also die Entriegelungselementanordnung angehoben wird, dann wird die Stiftanordnung ebenfalls angehoben, um die Fixierung der Behälteraufnahme gegenüber dem Fahrgestell quer zur Hubrichtung zu lösen.

Vorzugsweise ist die Zentrierflächenanordnung gegenüber der Hubrichtung geneigt. Dies erleichtert das "Einfädeln" des Behälters auf die Behälteraufstandsfläche. Die Zentrierflächenanordnung bildet dann eine Art "Trichter", in den der Boden des zu entnehmenden Behälters eintreten kann. Die Behälteraufnahme bewegt sich unter der Wirkung der Zentrierflächenanordnung quer zur Hubrichtung in die richtige Position.

Vorzugsweise steht die Entriegelungselementanordnung in einer Transportposition der Behälteraufnahme über die Behälteraufstandsfläche im Aufnahmebereich vor. Damit wird der Behälter beim Transport sicher gehalten. Der Überstand muss dabei allerdings nicht allzu groß sein.

Alternativ oder zusätzlich kann vorgesehen sein, dass die Behälteraufnahme Randleisten aufweist, die die Behälteraufstandsfläche begrenzen. Auch die Randleisten können verwendet werden, um zu verhindern, dass der Behälter von der Behälteraufstandsfläche herunterrutscht.

Vorzugsweise ist die Behälteraufnahme auf einer Grundplatte gelagert, mit der die Hubeinrichtung zusammenwirkt. Man kann dann die Hubfunktion von der schwimmenden Lagerung entkoppeln. Die Hubeinrichtung wirkt nur auf die Grundplatte. Die schwimmende Lagerung der Behälteraufnahme erfolgt zwischen der Behälteraufnahme und der Grundplatte.

Vorzugsweise ist zwischen der Grundplatte und der Behälteraufnahme eine Kugelrollenanordnung angeordnet. Die Kugelrollenanordnung kann beispielsweise eine oder mehrere Kugeln aufweisen, die an der Grundplatte gehalten sind, sich aber drehen können. Auf der Kugel ruht dann die Behälteraufnahme, so dass bei einer Bewegung der Behälteraufnahme quer zur Hubrichtung die Kugel oder die Kugeln gedreht werden.

Die Erfindung wird im Folgenden anhand eines bevorzugten Ausführungsbeispiels in Verbindung mit der Zeichnung beschrieben. Hierin zeigen:
- Fig. 1: einen Beschickungswagen für ein Behälterstapellager in perspektivischer Darstellung,
- Fig. 2: eine perspektivische Darstellung einer Behälteraufnahme mit Grundplatte,
- Fig. 3: die Grundplatte,
- Fig. 4: die Behälteraufnahme in perspektivischer Darstellung von unten,
- Fig. 5: eine Fixiereinrichtung in Fixierstellung,
- Fig. 6: die Fixiereinrichtung beim Lösen und
- Fig. 7: die Fixiereinrichtung in gelöster Position.

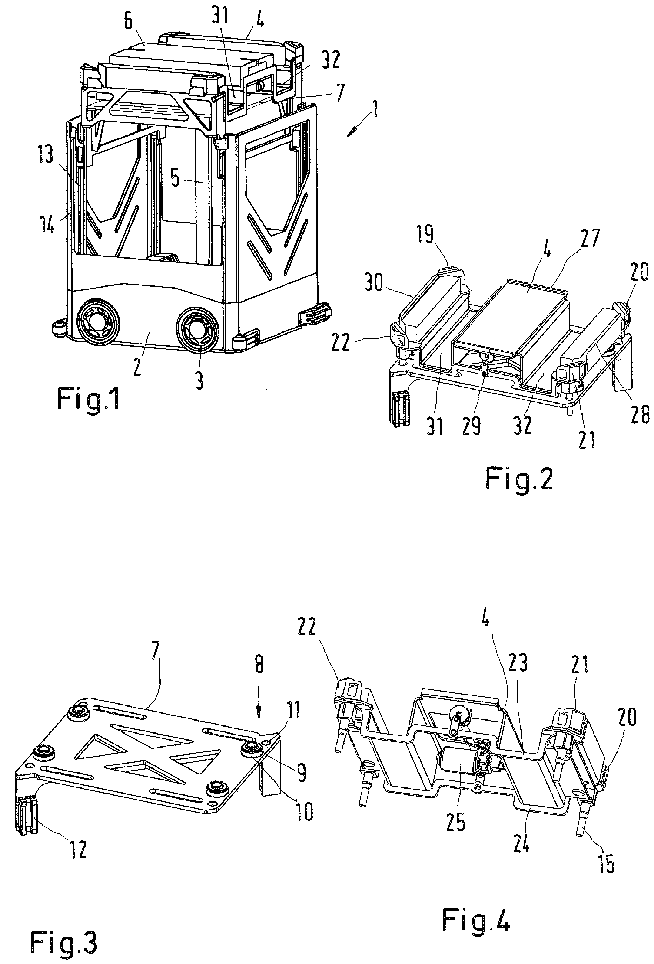

Fig. 1 zeigt schematisch einen Beschickungswagen 1 für ein nicht näher dargestelltes Behälterstapellager.

Der Beschickungswagen 1 weist ein Fahrgestell 2 mit mehreren Rädern 3 auf, mit denen der Beschickungswagen auf einem Fußboden oder einer anderen Unterlage verfahrbar ist.

Ferner weist der Beschickungswagen 1 eine höhenverstellbare Behälteraufnahme 4 auf, deren Höhe gegenüber dem Fahrgestell 2 durch eine Hubeinrichtung 5 veränderbar ist. Die Hubeinrichtung 5 weist eine Schubkette auf, mit der die Behälteraufnahme 4 in eine Hubrichtung bewegt werden kann. Die Hubrichtung entspricht dabei in der Regel der Schwerkraftrichtung.

Die Behälteraufnahme 4 weist eine Behälteraufstandsfläche 6 auf, auf der ein nicht näher dargestellter Behälter aufgesetzt werden kann. Die Schubkette wird durch einen Elektromotor oder einen anderen Aktor, der hydraulisch oder pneumatisch ausgebildet sein kann, angetrieben. Die Schubkette bildet damit einen Teil eines Hubantriebs.

Die Behälteraufnahme 4 ist auf einer Grundplatte 7 angeordnet, die in Fig. 3 näher dargestellt ist. Die Grundplatte 7 weist mehrere Kugelrollenanordnungen 8 auf. Jede Kugelrollenanordnung 8 weist eine Kugel 9 auf, die in einem Käfig 10 gehalten ist, der an der Grundplatte 7 befestigt ist.

Neben jeder Kugelrollenanordnung 8 ist eine Bohrung 11 angeordnet, die einen Teil einer Fixiereinrichtung bildet, die weiter unten beschrieben werden wird.

Die Grundplatte 7 weist Führungselemente 12 auf, mit denen sie in entsprechenden Führungen 13 geführt ist, die am Fahrgestell 2 befestigt sind. Die Führungen 13 sind dabei an vertikal verlaufenden Streben 14 angeordnet.

Fig. 1 zeigt eine Ausgestaltung, bei der an allen vier Ecken der Grundplatte 7 entsprechende Führungen 12 vorgesehen sind. Die Fig. 2 und 3 zeigen eine abgewandelte Ausgestaltung, um zu zeigen, dass prinzipiell nur zwei Führungen 12 erforderlich sind, die vorzugsweise an diagonal gegenüberliegenden Ecken der Grundplatte 7 angeordnet sind.

Die Behälteraufnahme 4 ruht auf den Kugelrollenanordnungen 8. Die Kugelrollenanordnungen 8 bilden dabei eine Lagereinrichtung, die eine Bewegung der Behälteraufnahme 4 gegenüber dem Fahrgestell 2 quer zur Hubrichtung ermöglicht.

Eine derartige Bewegung kann jedoch durch die oben bereits erwähnte Fixiereinrichtung blockiert werden. Die Fixiereinrichtung ist lösbar, um die Bewegung der Behälteraufnahme 4 gegenüber der Grundplatte 7 und damit gegenüber dem Fahrgestell 2 zu ermöglichen. Hierzu weist die Fixiereinrichtung eine Stiftanordnung mit mindestens einem Stift 15 auf. Im vorliegenden Ausführungsbeispiel sind jedoch an allen Ecken der Behälteraufnahme 4 entsprechende Stifte 15 vorgesehen. Jeder Stift 15 tritt in die oben erwähnte Bohrung 11 ein.

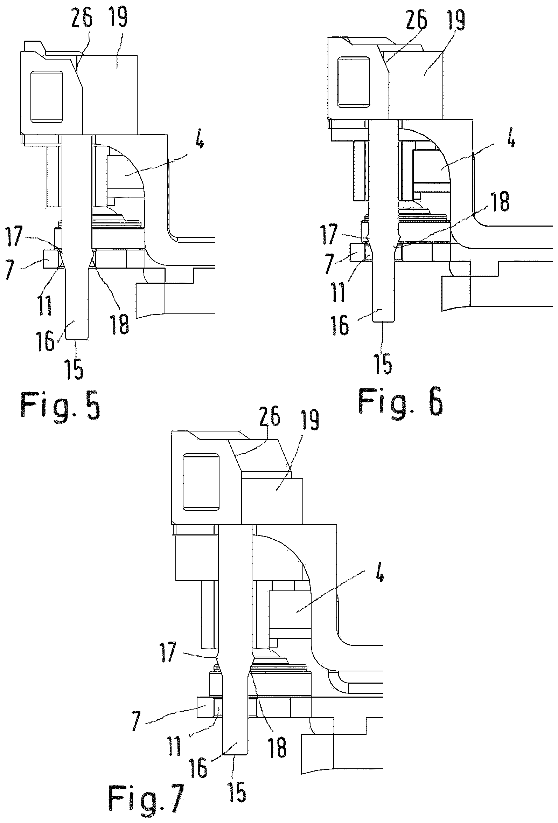

Wie man in Fig. 5 erkennen kann, weist jeder Stift 15 einen ersten Abschnitt 16 mit einem ersten Durchmesser auf, der kleiner ist als ein Durchmesser der Bohrung 11, beispielsweise 10 mm bis 30 mm kleiner. Ferner weist jeder Stift 15 einen zweiten Abschnitt 17 auf, der einen zweiten Durchmesser aufweist, der dem Durchmesser der Bohrung 11 entspricht. Der zweite Abschnitt 17 weist gegenüber der Bohrung 11 ein kleines Spiel auf, d.h. der zweite Durchmesser ist geringfügig kleiner als der Durchmesser der Bohrung 11. Das Spiel ist jedoch nur so groß, dass eine Bewegung des Stifts 15 in der Bohrung 11 ermöglicht ist. Zwischen dem ersten Abschnitt 16 und dem zweiten Abschnitt 17 ist ein Übergangsabschnitt 18 vorgesehen, in dem sich der Durchmesser des Stifts 15 vom ersten Durchmesser zum zweiten Durchmesser hin erweitert.

Die Behälteraufnahme 4 weist eine Entriegelungseinrichtung auf, die an den vier Ecken der Behälteraufnahme jeweils ein Entriegelungselement 19-22 aufweist. Die Entriegelungselemente 19-22 sind an einer Rahmenanordnung mit zwei Rahmen 23, 24 befestigt.

Die Rahmen 23, 24 sind mit einem zweiten Hubantrieb 25 verbunden, mit dem die Rahmen 23, 24 und damit die Entriegelungselemente 19-22 gegenüber der Behälteraufnahme 4 und damit gegenüber der Grundplatte 7 angehoben und abgesenkt werden können.

Wenn die Entriegelungselemente 19-22 angehoben werden, dann können sie nicht näher dargestellte Halteelemente eines Behälterstapellagers öffnen und/oder in einer geöffneten Stellung halten, bis ein zu entnehmender Behälter mit der Behälteraufnahme 4 abgesenkt worden ist. Die Stifte 15 stehen mit dem Rahmen 23 in Verbindung und werden bei einem Anheben der Entriegelungselemente 19-22 ebenfalls mit angehoben. Dadurch gelangen die Stifte 15 aus der in Fig. 5 dargestellten Position, in der die Behälteraufnahme 4 gegenüber der Grundplatte 7 quer zur Hubrichtung fixiert ist, in die in Fig. 7 dargestellte Position, in der die Behälteraufnahme 4 gegenüber der Grundplatte 7 schwimmend gelagert ist.

In dieser Position ist eine Bewegung der Behälteraufnahme 4 gegenüber der Grundplatte 7 quer zur Hubrichtung möglich und zwar in der Größenordnung von einigen Zentimetern, beispielsweise 1 bis 3 cm.

Die Entriegelungselemente 19-22 weisen eine Zentrierflächenanordnung auf. Die Zentrierflächenanordnung weist eine Fläche 26 auf, die gegenüber der Hubrichtung geneigt ist. Wenn die Behälteraufnahme 4 von unten an einen Behälter heranbewegt wird, beispielsweise in einem Einlager- oder Auslagerpunkt, dann sind zuvor die Entriegelungselemente 19-22 von der Grundplatte 7 wegbewegt worden und die Entriegelungselemente 19-22 kommen mit der geneigten Fläche 26 in Kontakt mit dem Behälter. Damit ist es möglich, die Behälteraufnahme 4 auf den Behälter auszurichten.

Wie man in Fig. 2 erkennen kann, weist die Behälteraufnahme an ihren Rändern Randleisten 27-30 auf, die verhindern, dass ein auf der Behälteraufnahme 4 ruhender Behälter beim Transport aus dem Stapellager hinaus oder in das Stapellager hinein von der Behälteraufnahme 4 herunterrutschen kann.

Fig. 6 zeigt die Situation beim Absenken der Entriegelungselemente 19-22. Der Stift 15 wird durch den Übergangsbereich 18 in der Bohrung 11 zentriert, so dass die Behälteraufnahme 4 gegenüber der Grundplatte 7 wieder eine definierte Position erhält.

Die Behälteraufnahme 4 weist noch Ausklinkungen 31, 32 auf, wobei die Öffnung der Ausklinkungen 31, 32 vorzugsweise in Rollrichtung der Räder 3 gerichtet ist. Damit ist es möglich, einen Behälter, der auf der Behälteraufnahme 4 steht, in eine Abgabestation zu übergeben, wobei es lediglich erforderlich ist, dass die Abgabestation zwei zinkenartige Vorsprünge aufweist, die in die Ausklinkungen 31, 32 eintreten können, wenn der Beschickungswagen 1 entsprechend dorthin verfahren wird. Danach kann die Behälteraufnahme 4 abgesenkt werden, so dass der Behälter an die Abgabestation übergeben werden kann. Auch die Übernahme eines Behälters aus einer entsprechenden Aufnahmeeinrichtung kann auf diese Weise realisiert werden. Hierzu wird der Beschickungswagen 1 ohne Behälter in die Aufnahmeeinrichtung gefahren. Wenn dann die Hubeinrichtung 5 die Behälteraufnahme 4 anhebt, kommt der Behälter von der Aufnahmeeinrichtung frei und kann dann gemeinsam mit dem Beschickungswagen 1 abtransportiert werden.

## Patentansprüche

1. Behälterstapellager-Beschickungswagen (1) mit einem Fahrgestell (2) und einer gegenüber dem Fahrgestell (2) höhenverstellbaren Behälteraufnahme (4), die einen Aufnahmebereich mit einer Behälteraufstandsfläche (6) aufweist, wobei zwischen dem Fahrgestell (2) und der Behälteraufnahme (4) eine in eine Hubrichtung wirkende Hubeinrichtung (5) angeordnet ist, wobei zwischen der Behälteraufnahme (4) und dem Fahrgestell (2) eine Lagereinrichtung (8) angeordnet ist, die die Behälteraufnahme schwimmend lagert und eine Bewegung der Behälteraufnahme (4) gegenüber dem Fahrgestell (2) quer zur Hubrichtung ermöglicht, wobei eine Fixiereinrichtung (11, 15, 25) vorgesehen ist, die die Behälteraufnahme bei einem Transport eines Behälters aus einem Behälterstapellager (4) gegenüber dem Fahrgestell (2) quer zur Hubrichtung fixiert, wobei die Fixiereinrichtung (11, 15, 25) lösbar ist, um die schwimmende Lagerung zu ermöglichen.

2. Beschickungswagen nach Anspruch 1, **dadurch gekennzeichnet, dass** die Fixiereinrichtung (11, 15, 25) eine Stiftanordnung mit mindestens einem parallel zur Hubrichtung verlaufenden Stift (15) aufweist, der in einer quer zur Hubrichtung ortsfesten Bohrung (11) angeordnet ist, wobei der Stift (15) einen ersten Abschnitt (16) mit einem ersten Durchmesser, der kleiner ist als ein Durchmesser der Bohrung (11), und einen zweiten Abschnitt (17) mit einem zweiten Durchmesser aufweist, der dem Durchmesser der Bohrung (11) entspricht, wobei zwischen dem ersten Abschnitt (16) und dem zweiten Abschnitt (17) ein Übergangsabschnitt (18) vorgesehen ist, in dem sich der Durchmesser des Stiftes (15) vom ersten Durchmesser zum zweiten Durchmesser vergrößert.

3. Beschickungswagen nach Anspruch 1 oder 2, **dadurch gekennzeichnet, dass** die Hubeinrichtung (5) einen ersten Hubantrieb aufweist und ein zweiter Hubantrieb (25) vorgesehen ist, der auf eine Entriegelungseinrichtung für Halteelemente eines Behälterstapellagers wirkt, wobei der zweite Hubantrieb (25) einen Teil der Fixiereinrichtung (11, 15, 25) bildet.

4. Beschickungswagen nach Anspruch 3, **dadurch gekennzeichnet, dass** die Entriegelungselementanordnung mehrere im Bereich von Ecken der Behälteraufnahme (4) angeordnete Entriegelungselemente (19-22) aufweist, wobei zumindest einige der Entriegelungselemente (19-22) eine Zentrierflächenanordnung (26) aufweisen, die zum Aufnahmebereich gerichtet ist.

5. Beschickungswagen nach Anspruch 4, **dadurch gekennzeichnet, dass** die Entriegelungselementanordnung mit der Stiftanordnung in Wirkverbindung steht.

6. Beschickungswagen nach Anspruch 4 oder 5, **dadurch gekennzeichnet, dass** die Zentrierflächenanordnung (26) gegenüber der Hubrichtung geneigt ist.

7. Beschickungswagen nach einem der Ansprüche 4 bis 6, **dadurch gekennzeichnet, dass** die Entriegelungselementanordnung in einer Transportposition der Behälteraufnahme (4) über die Behälteraufstandsfläche (6) im Aufnahmebereich vorsteht.

8. Beschickungswagen nach einem der Ansprüche 4 bis 7, **dadurch gekennzeichnet, dass** die Behälteraufnahme (4) Randleisten (27-30) aufweist, die die Behälteraufstandsfläche (6) begrenzen.

9. Beschickungswagen nach einem der Ansprüche 1 bis 8,
**dadurch gekennzeichnet,**
**dass** die Behälteraufnahme (4) auf einer Grundplatte (7) gelagert ist, mit der die Hubeinrichtung (5) zusammenwirkt.

10. Beschickungswagen nach Anspruch 9, **dadurch gekennzeichnet, dass** zwischen der Grundplatte (7) und der Behälteraufnahme (4) eine Kugelrollenanordnung (8) angeordnet ist.

## Claims

1. Container stacking picking cart (1) having a chassis (2) and a container receptacle (4) which is vertically adjustable relative to the chassis (2) and has a receiving region with a container contact surface (6), a lifting device (5) acting in a lifting direction being arranged between the chassis (2) and the container receptacle (4), a bearing device (8) being arranged between the container receptacle (4) and the chassis (2), which supports the container receptacle in a floating manner and permits movement of the container receptacle (4) relative to the chassis (2) transversely with respect to the lifting direction, a fixing device (11, 15, 25) being provided which fixes the container receptacle relative to the chassis (2) transversely with respect to the lifting direction during transport of a container from a container stacking store (4), the fixing device (11, 15, 25) being releasable in order to permit the floating support.

2. Picking cart according to claim 1, **characterized in that** the fixing device (11, 15, 25) comprises a pin arrangement with at least one pin (15) extending parallel to the lifting direction, which pin is arranged in a bore (11) fixed transversely to the lifting direction, wherein the pin (15) has a first portion (16) with a first diameter which is smaller than a diameter of the bore (11), and a second section (17) with a second diameter which corresponds to the diameter of the bore (11), a transition section (18) being provided between the first section (16) and the second section (17) in which transition section the diameter of the pin (15) increases from the first diameter to the second diameter.

3. Picking cart according to claim 1 or 2, **characterized in that** the lifting device (5) comprises a first lifting drive and a second lifting drive (25) is provided which acts on an unlocking device for holding elements of a container stacking storage, the second lifting device (25) forming part of the fixing device (11, 15, 25).

4. Picking cart according to claim 3, **characterized in that** the unlocking element arrangement comprises a plurality of unlocking elements (19-22) arranged in the region of corners of the container receptacle (4), at least some of the unlocking elements (19-22) comprising a centering surface arrangement (26) directed towards the receptacle region.

5. Picking cart according to claim 4, **characterized in that** the unlocking element arrangement is operatively connected to the pin arrangement.

6. Picking cart according to claim 4 or 5, **characterized in that** the centering surface arrangement (26) is inclined with respect to the lifting direction.

7. Picking cart according to any of claims 4 to 6, **characterized in that** the unlocking element arrangement in a transport position of the container receptacle (4) projects beyond the container contact surface (6) in the receiving region.

8. Picking cart according to any of claims 4 to 7, **characterized in that** the container receptacle (4) has edge strips (27-30) which delimit the container contact surface (6).

9. Picking cart according to any of claims 1 to 8, **characterized in that** the container receptacle is mounted on a base plate (7) with which the lifting device (5) cooperates.

10. Picking cart according to claim 9, **characterized in that** a ball roller arrangement (8) is arranged between the base plate (7) and the container receptacle (4).

## Revendications

1. Chariot de chargement en entrepôt de piles de conteneurs (1) avec un châssis (2) et une réception de conteneur (4) réglable en hauteur par rapport au châssis (2), qui comporte une zone de réception avec une surface de support de conteneur (6), sachant qu'entre le châssis (2) et la réception de conteneur (4) est disposé un dispositif de levage (5) agissant dans une direction de levage , sachant qu'entre la réception de conteneur (4) et le châssis (2) est disposé un dispositif de support (8), qui supporte de façon flottante la réception de conteneur et permet un mouvement de la réception de conteneur (4) par rapport au châssis (2) transversalement à la direction de levage, sachant qu'un dispositif de fixation (11, 15, 25) est prévu, qui fixe la réception de conteneur lors d'un transport d'un conteneur depuis un entrepôt en piles de conteneurs (4) par rapport au châssis (2) transversalement à la direction de levage, sachant que le dispositif de fixation (11, 15, 25) est amovible pour permettre le support flottant.

2. Chariot de chargement selon la revendication 1, **caractérisé en ce que** le dispositif de fixation (11, 15, 25) comporte un système à broches avec au moins une broche (15) passant parallèlement à la direction de levage, qui est disposée dans un alésage (11) fixe transversalement à la direction de levage, sachant que la broche (15) comporte une première section (16) avec un premier diamètre, qui est plus petit qu'un diamètre de l'alésage (11) et une deuxième section (17) avec un deuxième diamètre, qui correspond au diamètre de l'alésage (11), sachant qu'entre la première section (16) et la deuxième section (17) une section de transit (18) est prévue dans laquelle le diamètre de la broche (15) s'accroît du premier diamètre au deuxième diamètre.

3. Chariot de chargement selon la revendication 1 ou 2, **caractérisé en ce que** le dispositif de levage (5) comporte un premier mécanisme de levage et un deuxième mécanisme de levage (25) est prévu, qui agit sur un dispositif de déverrouillage pour les éléments de maintien d'un entrepôt en piles de conteneurs, sachant que le deuxième mécanisme de levage (25) forme une partie de dispositif de fixation (11, 15, 25).

4. Chariot de chargement selon la revendication 3, **caractérisé en ce que** le système d'éléments de déverrouillage comporte plusieurs éléments de déverrouillage (19-22) disposés dans la zone des coins de la réception de conteneur (4), sachant qu'au moins plusieurs des éléments de déverrouillage (19-22) comportent un système de surface de centrage (26) qui est dirigé vers la zone de réception.

5. Chariot de chargement selon la revendication 4, **caractérisé en ce que** le système d'éléments de déverrouillage se trouve en liaison fonctionnelle avec le système à broches.

6. Chariot de chargement selon la revendication 4 ou 5, **caractérisé en ce que** le système de surface de centrage (26) est inclinée par rapport à la direction de levage.

7. Chariot de chargement selon l'une quelconque des revendications 4 à 6, **caractérisé en ce que** le système d'éléments de déverrouillage fait saillie dans la zone de réception dans une position de transport de la réception de conteneur (4) au-dessus de la surface de support de conteneur (6).

8. Chariot de chargement selon l'une quelconque des revendications 4 à 7, **caractérisé en ce que** la réception de conteneur (4) comporte des rebords (27-30), qui délimitent la surface de support de conteneur (6).

9. Chariot de chargement selon l'une quelconque des revendications 1 à 8, **caractérisé en ce que** la réception de conteneur (4) est supportée sur une plaque de base (7) avec laquelle coopère le système de levage (5).

10. Chariot de chargement selon la revendication 9, **caractérisé en ce qu'**un système à roulettes sphériques (8) est disposé entre la plaque de base (7) et la réception de conteneur (4).
